# FASCICULE DE BREVET EUROPEEN

(11) **EP 2 890 612 B1**
(45) Date de publication et mention de la délivrance du brevet: **08.08.2018**
(21) Numéro de dépôt: 13762192.6
(22) Date de dépôt: 27.08.2013
(51) Int. Cl.: B64D 37/00, B64D 37/32, F02C 7/22, F02C 7/232

(54) **PROCÉDÉ DE VIDANGE ET COLLECTEUR DE PURGE DE CIRCUIT DE CARBURATION D'UN HÉLICOPTÈRE**
DRAINAGEVERFAHREN UND SPÜLUNGSKOLLEKTOR EINES VERGASERSYSTEMS EINES HUBSCHRAUBERS
DRAINAGE METHOD AND PURGE COLLECTOR OF A CARBURATION SYSTEM OF A HELICOPTER

(30) Priorité: 30.08.2012 FR 1258120
(43) Date de publication de la demande: 08.07.2015
(73) Titulaire: Safran Helicopter Engines, 64510 Bordes (FR)
(72) Inventeur: PEARCE, Simon, F-64510 Assat (FR); LAVIE-CAMBOT, Bernard, F-64270 l'Hopital d'Orion (FR); MOEBS, Hubert, Fort Worth, TX 76107 (US)
(74) Mandataire: Gevers & Orès
(86) Numéro de dépôt international: PCT/FR2013/051976
(87) Numéro de publication internationale: WO 2014/033400

(56) Documents cités:
- GB-A- 742 485
- US-A- 3 901 025
- US-A1- 2003 110 775
- US-A1- 2010 132 368

## Description

### DOMAINE TECHNIQUE

L'invention se rapporte à un procédé de vidange de circuit de carburation d'un hélicoptère, à un collecteur de purge d'hélicoptère apte à mettre en oeuvre ce procédé, ainsi qu'à un moteur d'hélicoptère équipé d'un tel collecteur.

Les moteurs d'hélicoptère sont en général purgés lors des arrêts afin d'éviter la cokéfaction du carburant qui serait favorisée par la chaleur résiduelle. Le carburant purgé est stocké puis éjecté dans les tuyères lorsque les moteurs sont redémarrés pour la mission suivante.

L'architecture de chaque moteur comporte classiquement une chambre de combustion dans laquelle le carburant est injecté via une roue d'injection. La chambre de combustion est mise à l'air via un drain qui est également purgé à son entrée.

### ÉTAT DE LA TECHNIQUE

Actuellement, le carburant purgé à l'arrêt des moteurs est transmis dans un collecteur de drains de purge. Le collecteur reçoit également la purge (comprenant des condensats d'eau, des impuretés, etc.) du drain de mise à l'air de la chambre de combustion. Au redémarrage du moteur, le carburant, les condensats et les impuretés du collecteur sont aspirés dans la tuyère d'échappement du moteur et éjectés. Un exemple de l'art antérieur est donné par US3901025.

L'éjection dans la tuyère provoque la combustion du carburant et des impuretés ainsi que la vaporisation des condensats d'eau. Cette combustion et cette vaporisation génèrent un nuage de fumée visible, provenant en particulier du deuxième moteur qui démarre sensiblement plus rapidement que le premier et aspire donc plus rapidement le carburant purgé. La présence de ce nuage de fumée n'est pas acceptable car il pourrait supposer un dysfonctionnement des moteurs.

Pour remédier à ce problème, il a été envisagé de réaliser un retour au réservoir de carburant. Cette solution n'est pas viable car la température élevée du carburant purgé et son volume (en particulier en cas de panne du clapet d'éjection) sont incompatibles avec le matériau plastique utilisé habituellement dans les tuyauteries de mise à l'air du réservoir de carburant. De plus, la connexion entre le collecteur et le réservoir pose des problèmes de sélectivité et de compatibilité (pressurisation, pollution par les gaz chauds, etc.).

### EXPOSÉ DE L'INVENTION

L'invention vise à empêcher la formation de fumée au moins au redémarrage des moteurs, tout en s'affranchissant des inconvénients de l'état de la technique. Pour ce faire, il est prévu de piéger le carburant purgé à l'arrêt moteur et de le vidanger pendant le début de vol suivant en profitant de l'inclinaison de l'hélicoptère.

Plus précisément, la présente invention a pour objet un procédé de vidange d'un moteur d'un hélicoptère dans lequel le carburant, purgé à l'arrêt du moteur, est recueilli dans un collecteur de purge en liaison avec la tuyère d'éjection des gaz. Le carburant est transmis dans une enceinte du collecteur fermée en une extrémité de fond et ouverte en son extrémité opposée située vers l'avant de l'hélicoptère. L'enceinte présente, par rapport au sol de référence horizontal et lorsque l'hélicoptère est en position sol, une inclinaison de référence positive ascendante depuis son extrémité de fond vers son extrémité ouverte située vers l'avant de l'hélicoptère. L'enceinte étant conformée en dimension et en inclinaison pour piéger le carburant purgé dans cette enceinte. Pendant la phase de redémarrage du moteur, le carburant purgé reste piégé sans se déverser dans la tuyère d'éjection. En phases de décollage puis d'accélération, l'inclinaison de l'hélicoptère passe de sensiblement nulle à progressivement négative. L'enceinte est également conformée en dimension et inclinaison pour que, en suivant les variations d'inclinaison de l'hélicoptère pendant ces phases de décollage puis d'accélération, le carburant commence à se déverser de l'enceinte vers la tuyère d'éjection d'abord lentement puis en s'accélérant progressivement jusqu'à vider l'enceinte, ce qui empêche l'apparition de fumée significative en phase de démarrage, de décollage et de début d'accélération du fait de cette progressivité.

Selon des modes de mise en oeuvre particuliers :
- l'angle d'inclinaison de référence de l'enceinte est déterminé en fonction de l'angle d'inclinaison de l'hélicoptère au sol et d'une valeur d'inclinaison nominale de l'hélicoptère en phase d'accélération par rapport au sol de référence horizontal de sorte que l'enceinte présente, en phase d'accélération de l'hélicoptère, une inclinaison dans un intervalle situé autour de zéro degré par rapport au sol de référence horizontal ;
- l'inclinaison de référence de l'enceinte est prédéfinie dans un intervalle donné pour que l'inclinaison de l'enceinte en phase d'accélération par rapport au sol de référence se situe dans un intervalle de ± 5° ;
- l'écoulement du carburant déversé à partir de l'enceinte selon la direction d'avancée de l'hélicoptère est réalisé par un retour en sens inverse du sens de versement dans le collecteur depuis l'extrémité ouverte de l'enceinte vers la tuyère d'éjection.

L'invention se rapport également à un collecteur de purge d'hélicoptère apte à mettre en oeuvre le procédé ci-dessus. Un tel collecteur comporte une paroi longitudinale externe globalement cylindrique limitée transversalement par deux parois d'extrémité fermées, un axe de symétrie longitudinal incliné de manière ascendante depuis la paroi d'extrémité dite inférieure située au plus près du sol de référence horizontal lorsque l'hélicoptère est posé en position sol, au moins un raccord destiné à être connecté au drain de purge de roue d'injection de carburant dans une chambre de combustion du moteur, et une liaison destinée à être raccordée à une tuyère d'éjection des gaz connectée à la paroi d'extrémité de fond. Le collecteur définit un espace intérieur dans lequel est agencée une enceinte de forme globalement cylindrique et d'axe de symétrie sensiblement parallèle à l'axe du collecteur. L'enceinte présente une paroi longitudinale et deux parois transversales d'extrémité, une première paroi et une paroi de fond, la paroi de fond étant située plus près du sol de référence que ladite première paroi lorsque l'hélicoptère est en position sol, ainsi qu'une ouverture formée à proximité de cette première paroi. L'enceinte est connectée au raccord de purge de la roue d'injection via une liaison radiale débouchant sur sa paroi longitudinale, et son axe de symétrie est incliné par rapport au sol de référence lorsque l'hélicoptère est position sol d'un angle de référence tel que cet axe de symétrie puisse se retrouver sensiblement parallèle au sol de référence lorsque l'hélicoptère est en phase d'accélération.

Selon des modes de réalisation avantageux :
- l'axe de l'enceinte est incliné d'un angle relatif fixé entre +5 et +10° par rapport à un axe principal de l'hélicoptère définissant l'inclinaison de l'hélicoptère par rapport au sol de référence horizontal;
- la liaison radiale du raccord de drain de purge de la roue d'injection débouche plus près de la première paroi que de la paroi de fond de l'enceinte, afin de faciliter le remplissage ;
- l'enceinte a une forme cylindrique à section circulaire ;
- l'enceinte a un volume plus de deux fois supérieur au volume de carburant pouvant être piégé dans l'enceinte, pour couvrir des cas de remplissage particuliers comme un démarrage avorté ou une vidange incomplète lors d'un vol.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue latérale en partie transparente d'un moteur d'hélicoptère avec son système de drainage ;
- la figure 2, une vue latérale en transparence d'un collecteur selon l'invention lorsque l'hélicoptère est en position sol ; et
- la figure 3, une vue du collecteur selon la figure 2 lorsque l'hélicoptère est en début de phase d'accélération suite au décollage.

### DESCRIPTION DÉTAILLÉE

Sauf indication contraire, les inclinaisons évoquées dans le présent texte sont mesurées par rapport à un sol « S₀ » qui est un sol de référence situé dans un plan horizontal par rapport au champ d'attraction terrestre.

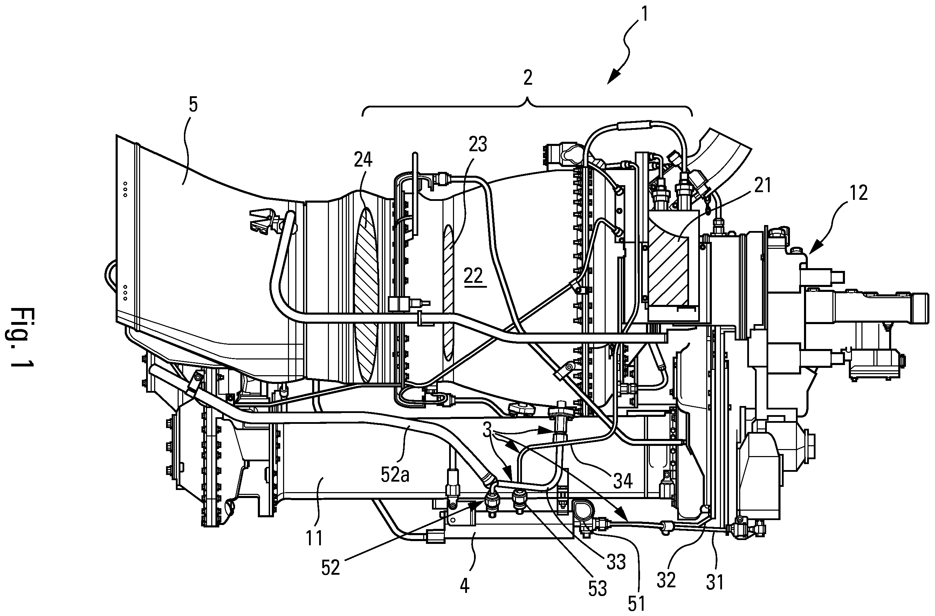

En référence à la vue latérale de la figure 1, un moteur d'hélicoptère 1 comporte (vus en transparence) un générateur de gaz 2, formé d'un compresseur 21, d'une chambre de combustion 22 et d'une turbine 23, en liaison avec une turbine libre 24. La turbine libre 24 entraîne le rotor principal (non représenté) par un arbre de puissance 11 via une boîte de transmission 12. Les gaz issus de la combustion sont éjectés dans une tuyère 5.

Afin de rendre le moteur propre, un ensemble de drainage 3 collecte les liquides résiduels (carburant, huile, condensats d'eau, impuretés, etc.) vers un collecteur 4. En particulier, le collecteur conserve une quantité de carburant purgé pendent l'arrêt du moteur. Cet ensemble comprend :
- des conduits de drainage d'huile 31 et 32 provenant de l'arbre de puissance 11 et de la pompe de carburant 13 ;
- un conduit 33 de drainage de la chambre de combustion 22 ; et
- un conduit de purge 34 de roue d'injection de carburant dans la chambre de combustion 22.

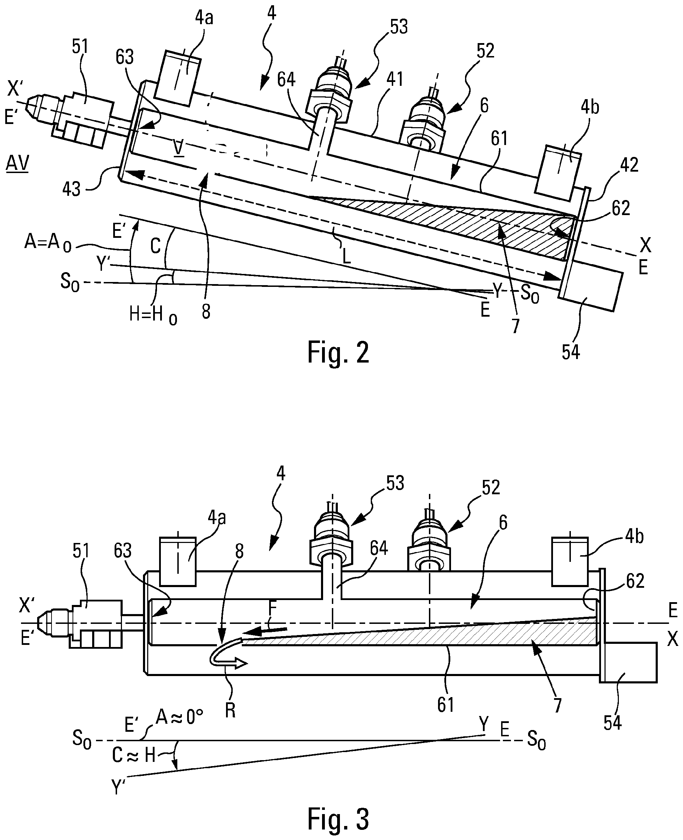

Le collecteur 4 selon l'invention est détaillé ci-après en référence à la vue latérale en transparence de la figure 2. Un tel collecteur 4, fixé au moteur par des pattes de fixation 4a, 4b, comporte une paroi longitudinale externe cylindrique 41, de section circulaire dans l'exemple, limitée transversalement par deux parois d'extrémité fermées, 42 et 43. La paroi longitudinale 41 présente un axe de symétrie longitudinal X'X incliné positivement de manière ascendante depuis la paroi d'extrémité de fond 42. Cette paroi de fond 42 est située plus près du sol « S₀ » que l'autre paroi d'extrémité 43 lorsque, comme dans l'exemple illustré, l'hélicoptère est en position de repos, posé au sol (dite en « position sol »).

Les conduits de drainage sont connectés au collecteur via des raccords (visibles également sur la figure 1), respectivement le raccord 51 pour les conduit de drainage d'huile 31 et 32, le raccord 52 pour le conduit 33 de drainage de la chambre de combustion, et le raccord 53 pour le conduit de purge 34 de roue d'injection. Le raccord 52 possède une prise d'air 52a (visible sur la figure 1) pour purger l'excès d'air en surpression dans la chambre de combustion. De plus, un conduit de liaison 54 relie la paroi d'extrémité inférieure 42 du collecteur 4 à la tuyère d'éjection des gaz 5.

La paroi longitudinale 41 délimite un volume intérieur « V » dans lequel est montée une enceinte 6 sensiblement au centre de ce volume « V » dans l'exemple. Cette enceinte 6 est de forme globalement cylindrique et d'axe de symétrie E'E ici confondu avec l'axe X'X de la paroi longitudinale 41 du collecteur 4. L'enceinte 6 présente donc une même inclinaison que le collecteur 4. Elle présente également une paroi longitudinale 61 de section circulaire et deux parois transversales d'extrémité, une paroi première paroi d'extrémité 63 et une paroi d'extrémité dite de fond 62. La première paroi 63 est située vers l'avant AV de l'hélicoptère, et la paroi de fond 62 est située plus près du sol de référence S₀ que la première paroi d'extrémité 63. Dans l'exemple, l'enceinte 6 est fixée par ses parois d'extrémités 62 et 63 aux parois d'extrémités respectives 42 et 43 du collecteur 4.

Une ouverture, sous la forme d'une fente 8, est pratiquée dans une portion inférieure de secteur circulaire de la paroi longitudinale 61 de l'enceinte 6, la portion est dite inférieure au regard du sol de référence S₀. La fente 8 est réalisée à proximité de la première paroi d'extrémité 63. Alternativement l'ouverture 61 peut être pratiquée partiellement ou en totalité en bordure de la paroi longitudinale 61. Dans ce cas, l'enceinte peut présenter une ouverture totale ou une première paroi transversale partielle qui n'est plus accolée à la paroi d'extrémité 43 du collecteur 4.

De plus, l'enceinte 6 est connectée au raccord 53 de conduit de purge de roue d'injection 34 via une conduite de liaison radiale 64 débouchant sur la paroi longitudinale 61. La conduite de liaison radiale 64 débouche plus près de l'extrémité ouverte 43 que de l'extrémité fermée 42 de l'enceinte 4, afin de faciliter le remplissage du carburant de purge 7 dans l'enceinte 6 sans provoquer de projection du carburant.

Dans l'exemple, l'enceinte inclinée est conformée en dimension de sorte que son volume « V », par exemple supérieur à 60 ml, et sa longueur « L » soient suffisants pour permettre de stocker environ 30 ml de carburant lorsque l'hélicoptère est en position sol, et cela sans les déverser dans le collecteur 4 avant la phase d'accélération de l'hélicoptère suite au décollage.

De manière générale, que l'hélicoptère soit au sol ou en vol, l'angle d'inclinaison « A » de l'axe X'X de l'enceinte 6 par rapport au sol de référence (ci-après « angle d'inclinaison de l'enceinte »), est la somme de l'angle d'inclinaison « H » de l'axe principal Y'Y de l'hélicoptère par rapport au sol de référence (ci-après « angle d'inclinaison hélicoptère ») et de l'angle d'inclinaison relatif « C » de l'axe de l'enceinte X'X par rapport à l'axe principal de l'hélicoptère Y'Y.

Lorsque l'hélicoptère est en position sol, l'angle d'inclinaison de l'enceinte « A » prend une valeur de référence notée « A₀ » par rapport au sol de référence. La valeur de cet angle de référence « A₀ » dépend directement de celle de l'angle relatif « C » d'inclinaison de l'enceinte 6 par rapport à l'hélicoptère, à une constante « H₀ » près, « H₀ » étant l'angle d'inclinaison hélicoptère en position sol. L'angle d'inclinaison relatif « C » de l'enceinte, et donc son angle d'inclinaison de référence « A₀ », est tel que l'axe X'X de l'enceinte 6 puisse se retrouver, lorsque l'hélicoptère est en phase d'accélération, sensiblement parallèle au sol de référence, donc selon un angle d'inclinaison « A » qui oscille autour de zéro. Cette phase est décrite plus en détail ci-après.

Dans l'exemple illustré, l'angle de référence « A₀ » est égal à 11 °, somme de l'angle d'inclinaison « H₀ » de l'hélicoptère en position sol, fixé à 3°, et de l'angle d'inclinaison relatif « C », réglé à 8° dans l'exemple. De préférence, l'angle « C » est compris entre +5 et +10°. Cet ange d'inclinaison relatif « C » est prédéfini en fonction de l'angle d'inclinaison hélicoptère « H » en phase d'accélération après redémarrage des moteurs et décollage de l'hélicoptère, comme exposé ci-après en référence à la figure 3.

Lors du décollage de l'hélicoptère, qui fait suite à la phase de redémarrage des moteurs, et jusqu'au début de la phase d'accélération, l'inclinaison de l'hélicoptère « H » devient sensiblement nulle et l'angle d'inclinaison « A » devient égal à l'angle d'inclinaison relatif « C », soit environ 8° dans l'exemple. L'enceinte 6 est conformée en dimension - volume « V » et longueur « L » - ainsi qu'en inclinaison « A » de sorte que le carburant de purge 7 se rapproche de la paroi d'extrémité libre 63 de l'enceinte 6, du fait du passage de l'angle d'inclinaison « A » de 11 à 8°, et peut commencer à se déverser lentement dans le collecteur 4.

En effet, la valeur de l'angle d'inclinaison relatif « C », ici 8°, et donc de l'inclinaison « A » de l'enceinte au décollage, ainsi que celle du volume « V » de l'enceinte 6, ici 70 ml, ont été prédéfinis pour favoriser un déversement lent en phase de décollage et de début d'accélération, empêchant ainsi un déversement brutal du carburant piégé 7 dans la tuyère d'éjection via le collecteur 4 et le conduit de liaison 54. Un tel déversement brutal provoque la formation de fumée indésirable au moment du décollage, ce que l'on cherche précisément à éviter.

La figure 3 illustre une vue du collecteur selon la figure 2 au début de la phase d'accélération suite au décollage. En phase d'accélération, entre phase stationnaire et période de vol stabilisé, l'hélicoptère « penche vers l'avant » : l'angle d'inclinaison hélicoptère « H » est alors négatif, pouvant atteindre par exemple -5° et jusqu'à environ -10° ou plus par rapport au sol de référence.

Pendant cette phase d'accélération, le carburant 7 se déverse de plus en plus rapidement (flèche F) dans le collecteur 4 au fur et à mesure que l'angle d'inclinaison hélicoptère « H » devient de plus en plus négatif. Le carburant 7 se retrouve dans le collecteur, et sera aspiré vers la tuyère d'éjection 5 (figure 1), selon un flux de retour (flèche R) dans le collecteur 4 en sens inverse du sens de versement (flèche F) - de la fente 8 de l'enceinte 6 vers le conduit de liaison 54 - et jusqu'à vider l'enceinte 6. La progressivité d'aspiration permet d'éviter l'apparition de fumée significative en phase de démarrage, de décollage et de début d'accélération de l'hélicoptère.

Le déversement accéléré résulte du fait que l'angle d'inclinaison relatif « C » est prédéfini pour que l'angle d'inclinaison de l'enceinte « A » oscille autour de zéro pendant la phase d'accélération. Pour ce faire, l'angle d'inclinaison relatif « C » est réglé - de préférence pris entre +5 et +10°, +8° dans l'exemple - pour compenser sensiblement l'angle d'inclinaison hélicoptère « H » qui, en accélération, peut aller à -5° et jusqu'à -10° (ou plus), par exemple -8° en moyenne. Dans ces conditions, en phase d'accélération après décollage, l'angle d'inclinaison « A » de l'enceinte 6 reste sensiblement proche de zéro, entre +3 et - 2° dans l'exemple (plus généralement dans l'intervale ±5° lorsque l'angle « C » est réglé entre +5 et +10°), l'angle d'inclinaison de l'hélicoptère en position sol « H₀ », ici 3°, étant compensé dès le décollage. Avantageusement, le mouvement de l'hélicoptère provoque la formation de « vagues » dans l'enceinte 6 qui vont aussi aider au versement du carburant.

La présente invention n'est pas limitée aux exemples décrits et représentés. Il est par exemple possible de prévoir un raccord de vidange pour purger le collecteur lui-même des liquides polluants drainés directement dans le collecteur. D'autre part, la forme de l'enceinte ou du collecteur peut être globalement cylindrique à section polyédrique oblongue. Il est également possible de prévoir un mécanisme de réglage de l'angle d'inclinaison du collecteur afin de l'ajuster en fonction de l'axe principal hélicoptère et/ou de l'inclinaison de l'hélicoptère à prévoir en phase d'accélération, par exemple dans le cadre de missions particulières de recherche.

## Revendications

1. Procédé de vidange d'un moteur d'hélicoptère dans lequel le carburant (7), purgé à l'arrêt du moteur, est recueilli dans un collecteur de purge (4) en liaison avec la tuyère d'éjection des gaz (5), **caractérisé en ce que** le carburant est transmis pendant la purge dans une enceinte (6) du collecteur (4), l'enceinte (6) étant conformée pour piéger le carburant purgé (7) pendant la phase de redémarrage du moteur, le carburant purgé (7) restant piégé sans se déverser dans la tuyère d'éjection (5), et **en ce que**, en phases de décollage puis d'accélération, l'enceinte (6) est également conformée pour que, en suivant les variations d'inclinaison (H) de l'hélicoptère pendant ces phases de décollage puis d'accélération, le carburant se déverse de l'enceinte (6) vers la tuyère d'éjection (5).

2. Procédé selon la revendication 1, dans lequel l'enceinte (6) de dimension (V, L) est fermée en une extrémité de fond (62) et ouverte en son extrémité opposée (63) située vers l'avant de l'hélicoptère (AV), l'enceinte (6) présentant, par rapport au sol de référence horizontal (S₀) et lorsque l'hélicoptère est en position sol (H₀), une inclinaison de référence positive ascendante (A₀) depuis son extrémité de fond (62) vers son extrémité ouverte (63), et une inclinaison (A) lorsque l'hélicoptère est en phases de décollage puis d'accélération, l'inclinaison (H) de l'hélicoptère passant de sensiblement nulle à progressivement négative.

3. Procédé selon la revendication précédente, dans lequel l'angle d'inclinaison de référence (A₀) de l'enceinte (6) est déterminé en fonction de l'inclinaison (H) de l'hélicoptère en phase d'accélération de sorte que l'enceinte (6) présente, en phase d'accélération de l'hélicoptère, une inclinaison (A) dans un intervalle situé autour de zéro degré par rapport au sol de référence horizontal (S₀).

4. Procédé selon la revendication précédente, dans lequel l'inclinaison de référence (A₀) de l'enceinte (6) est prédéfinie dans un intervalle donné pour que l'inclinaison (A) de l'enceinte (6) en phase d'accélération se situe dans un intervalle de ± 5°.

5. Collecteur de purge (4) de moteur d'hélicoptère (1) de mise en oeuvre du procédé selon l'une des revendications précédentes, adapté pour pouvoir être fixé sur un moteur d'hélicoptère, ledit collecteur comportant une paroi longitudinale externe (41) globalement cylindrique limitée transversalement par deux parois d'extrémité fermées (42, 43), un axe de symétrie longitudinal (X'X) incliné de manière ascendante depuis la paroi d'extrémité de fond (42) située au plus près du sol de référence horizontal (S₀) lorsque l'hélicoptère, sur le moteur duquel le collecteur de purge peut être fixé, est posé en position sol (H₀), au moins un raccord (53) destiné à être connecté au drain de purge de roue d'injection de carburant dans une chambre de combustion (22) du moteur (1), et une liaison (54) destinée à être raccordée à une tuyère d'éjection des gaz (5) connectée à la paroi d'extrémité de fond (43), **caractérisé en ce que** le collecteur définit un volume intérieur (V) dans lequel est agencé une enceinte (6) de forme globalement cylindrique et d'axe de symétrie (E'E) sensiblement parallèle à l'axe du collecteur (X'X), l'enceinte (6) présentant une paroi longitudinale (61) et deux parois transversales d'extrémité, une première paroi (63) et une paroi de fond (62), la paroi de fond (62) étant située plus près du sol de référence (S₀) que ladite première paroi (63) lorsque l'hélicoptère, sur le moteur duquel le collecteur de purge peut être fixé, est en position sol (H₀), ainsi qu'une ouverture (8) formée dans une portion inférieure de l'enceinte à proximité de cette première paroi (63) et **en ce que** l'enceinte (6) est connectée au raccord de purge de la roue d'injection (53) via une liaison radiale (64) débouchant sur sa paroi longitudinale (61), l'axe de symétrie de l'enceinte (E'E) étant incliné, par rapport au sol de référence horizontal (S₀) lorsque l'hélicoptère, sur le moteur duquel le collecteur de purge peut être fixé, est position sol (H₀), d'un angle de référence (A₀) tel que cet axe de symétrie (E'E) puisse se retrouver sensiblement parallèle au sol de référence (S₀) lorsque l'hélicoptère, sur le moteur duquel le collecteur de purge peut être fixé, est en phase d'accélération.

6. Collecteur de purge selon la revendication précédente, dans lequel l'axe de l'enceinte (E'E) est incliné d'un angle relatif (C) fixé entre +5 et +10° par rapport à un axe principal de l'hélicoptère (Y'Y) définissant l'inclinaison de l'hélicoptère (H) par rapport au plan de référence horizontal (S₀).

7. Collecteur de purge selon l'une des revendications 5 ou 6, dans lequel la liaison radiale (64) du raccord de drain de purge de la roue d'injection (53) débouche plus près de la première paroi (63) que de la paroi de fond (62) de l'enceinte (6).

8. Collecteur de purge selon l'une des revendications 5 à 7, dans lequel l'enceinte (6) a une forme cylindrique à section circulaire.

9. Collecteur de purge selon l'une des revendications 5 à 8, dans lequel l'enceinte (6) a un volume (V) plus de deux fois supérieur au volume de carburant (7) pouvant être piégé dans l'enceinte (6).

10. Moteur d'hélicoptère (1) équipé d'un collecteur (4) selon l'une des revendications 5 à 9.

## Patentansprüche

1. Verfahren zum Leeren eines Helikoptermotors, wobei der bei Stillstand des Motors ausgespülte Kraftstoff (7) in einem Spülkollektor (4) gesammelt wird, der mit der Schubdüse (5) in Verbindung steht, **dadurch gekennzeichnet, dass** der Kraftstoff während des Spülens in einen Behälter (6) des Kollektors (4) geleitet wird, wobei der Behälter (6) dafür ausgestaltet ist, den ausgespülten Kraftstoff (7) während der Neustartphase des Motors zurückzuhalten, wobei der ausgespülte Kraftstoff (7) zurückgehalten bleibt, ohne sich in die Düse (5) zu ergießen, und dadurch, dass der Behälter (6) ebenfalls dafür ausgestaltet ist, dass sich der Kraftstoff in der Abhebe-, anschließend Beschleunigungsphase, indem er den Neigungsänderungen (H) des Helikopters während dieser Abhebe-, anschließend Beschleunigungsphase folgt, aus dem Behälter (6) zur Düse (5) hin ergießt.

2. Verfahren nach Anspruch 1, wobei der Behälter (6) mit Abmessung (V, L) an einem unteren Ende (62) geschlossen und an seinem gegenüberliegenden Ende (63), das zur Vorderseite des Helikopters (AV) hin liegt, offen ist, wobei der Behälter (6) in Bezug auf den horizontalen Referenzboden (S₀), und wenn sich der Helikopter in Bodenposition (H₀) befindet, eine positive ansteigende Referenzneigung (A₀) von seinem unteren Ende (62) zu seinem offenen Ende (63) hin, und eine Neigung (A) aufweist, wenn sich der Helikopter in der Abhebe-, anschließend Beschleunigungsphase befindet, wobei die Neigung (H) des Helikopters von im Wesentlichen null zu zunehmend negativ übergeht.

3. Verfahren nach dem vorstehenden Anspruch, wobei der Referenzneigungswinkel (A₀) des Behälters (6) in Abhängigkeit von der Neigung (H) des Helikopters in der Beschleunigungsphase derart bestimmt wird, dass der Behälter (6) in der Beschleunigungsphase des Helikopters eine Neigung (A) in einem Intervall aufweist, das in Bezug auf den horizontalen Referenzboden (S₀) um null Grad herum liegt.

4. Verfahren nach dem vorstehenden Anspruch, wobei die Referenzneigung (A₀) des Behälters (6) in einem gegebenen Intervall vordefiniert ist, sodass die Neigung (A) des Behälters (6) in der Beschleunigungsphase in einem Intervall von ± 5° liegt.

5. Spülkollektor (4) für einen Helikoptermotor (1) zum Umsetzen des Verfahrens nach einem der vorstehenden Ansprüche, der dafür ausgebildet ist, an einem Helikoptermotor befestigt werden zu können, wobei der Kollektor eine allgemein zylindrische äußere Längswand (41), die quer von zwei geschlossenen Endwänden (42, 43) begrenzt wird, eine Längssymmetrieachse (X'X), die von der unteren Endwand (42) her, welche am nächsten zum horizontalen Referenzboden (S₀) liegt, wenn der Helikopter, an dessen Motor der Spülkollektor befestigt werden kann, in Bodenposition (H₀) positioniert ist, in ansteigender Weise geneigt ist, mindestens einen Anschluss (53), der dazu vorgesehen ist, mit dem Kraftstoffeinspritzrad-Spülablauf in einer Verbrennungskammer (22) des Motors (1) verbunden zu werden, und eine Verbindung (54) aufweist, die dazu vorgesehen ist, an eine Schubdüse (5), die mit der unteren Endwand (43) verbunden ist, angeschlossen zu werden, **dadurch gekennzeichnet, dass** der Kollektor ein Innenvolumen (V) definiert, in welchem ein Behälter (6) von allgemein zylindrischer Form und mit einer Symmetrieachse (E'E), die im Wesentlichen zur Achse des Kollektors (X'X) parallel ist, angeordnet ist, wobei der Behälter (6) eine Längswand (61) und zwei querstehende Endwände, eine erste Wand (63) und eine untere Wand (62), wobei die untere Wand (62) näher zum Referenzboden (S₀) liegt als die erste Wand (63), wenn sich der Helikopter, an dessen Motor der Spülkollektor befestigt werden kann, in Bodenposition (H₀) befindet, sowie eine Öffnung (8) aufweist, die in einem unteren Abschnitt des Behälters in Nähe dieser ersten Wand (63) gebildet ist, und dadurch, dass der Behälter (6) mit dem Spülanschluss des Einspritzrads (53) über eine radiale Verbindung (64) verbunden ist, welche an seiner Längswand (61) mündet, wobei die Symmetrieachse des Behälters (E'E) in Bezug auf den horizontalen Referenzboden (S₀), wenn sich der Helikopter, an dessen Motor der Spülkollektor befestigt werden kann, in Bodenposition (H₀) befindet, um einen Referenzwinkel (A₀) geneigt ist, sodass sich diese Symmetrieachse (E'E) im Wesentlichen parallel zum Referenzboden (S₀) wiederfinden kann, wenn sich der Helikopter, an dessen Motor der Spülkollektor befestigt werden kann, in der Beschleunigungsphase befindet.

6. Spülkollektor nach dem vorstehenden Anspruch, wobei die Achse des Behälters (E'E) um einen festen Relativwinkel (C) zwischen +5 und +10° in Bezug auf eine Hauptachse des Helikopters (Y'Y) geneigt ist, welche die Neigung des Helikopters (H) in Bezug auf die horizontale Referenzebene (S₀) definiert.

7. Spülkollektor nach einem der Ansprüche 5 oder 6, wobei die radiale Verbindung (64) des Spülablaufanschlusses des Einspritzrads (53) näher an der ersten Wand (63) als an der unteren Wand (62) des Behälters (6) mündet.

8. Spülkollektor nach einem der Ansprüche 5 bis 7, wobei der Behälter (6) eine zylindrische Form mit kreisförmigem Querschnitt aufweist.

9. Spülkollektor nach einem der Ansprüche 5 bis 8, wobei der Behälter (6) ein Volumen (V) aufweist, das mehr als zweimal größer ist als das Kraftstoffvolumen (7), das im Behälter (6) zurückgehalten werden kann.

10. Helikoptermotor (1), der mit einem Kollektor (4) nach einem der Ansprüche 5 bis 9 ausgestattet ist.

## Claims

1. Method for draining a helicopter engine wherein the fuel (7), purged during the engine shutdown, is collected in a purge collector (4) associated with the gas jet nozzle (5), **characterised in that** the fuel is transmitted during the purge in an enclosure (6) of the collector (4), the enclosure (6) being shaped to trap the fuel purged (7) during the restarting phase of the engine, the purged fuel (7) remaining trapped without flowing into the jet nozzle (5), and **in that**, in the take-off then acceleration phases, the enclosure (6) is also shaped so that, by following the variations in the inclination (H) of the helicopter during these take-off then acceleration phases, the fuel flows from the enclosure (6) to the jet nozzle (5).

2. Method according to claim 1, wherein the enclosure (6) of dimension (V, L) is closed at one bottom end (62) and open at the opposite end (63) thereof located towards the front of the helicopter (AV), the enclosure (6) having, in relation to the horizontal ground reference (S₀) and when the helicopter is in the ground position (H₀), an ascending positive reference inclination (A₀) from the bottom end (62) thereof to the open end (63), and an inclination (A) when the helicopter is in the take-off then acceleration phases, the inclination (H) of the helicopter changing from substantially zero to progressively negative.

3. Method as claimed in the preceding claim, wherein the reference angle of inclination (A₀) of the enclosure (6) is determined as a function of the inclination (H) of the helicopter in the acceleration phase in such a way that the enclosure (6) has, in the acceleration phase of the helicopter, an inclination (A) in a range located around zero degrees in relation to the horizontal ground reference (S₀).

4. Method as claimed in the preceding claim, wherein the reference inclination (A₀) of the enclosure (6) is predefined in a given range so that the inclination (A) of the enclosure (6) in the acceleration phase is within a range of ± 5°.

5. Purge collector (4) of a helicopter engine (1) for the implementation of the method according to one of the preceding claims, suitable for being fixed on a helicopter engine, said collector comprising a generally cylindrical outer longitudinal wall (41) limited transversely by two closed end walls (42, 43), a longitudinal axis of symmetry (X'X) inclined in an ascending manner from the bottom end wall (42) located as close as possible to the horizontal ground reference (S₀) when the helicopter, on the engine of which the purge collector can be fixed, is placed in the ground position (H₀), at least one coupling (53) intended to be connected to the fuel injection wheel purge drain in a combustion chamber (22) of the engine (1), and a connection (54) intended to be connected to a gas jet nozzle (5) connected to the bottom end wall (43), **characterised in that** the collector defines an inner volume (V) in which is arranged an enclosure (6) with a generally cylindrical shape and with an axis of symmetry (E'E) substantially parallel to the axis of the collector (X'X), with the enclosure (6) having a longitudinal wall (61) and two transverse end walls, a first wall (63) and a bottom wall (62), with the bottom wall (62) located closer to the ground reference (S₀) than said first wall (63) when the helicopter, on the engine of which the purge collector can be fixed, is in the ground position (H₀), as well as an opening (8) formed in a lower portion of the enclosure in the vicinity of this first wall (63) and **in that** the enclosure (6) is connected to the purge coupling of the injection wheel (53) via a radial connection (64) joining the longitudinal wall (61) thereof, with the axis of symmetry of the enclosure (E'E) being inclined, in relation to the horizontal ground reference (S₀) when the helicopter, on the engine of which the purge collector can be fixed, in the ground position (H₀), by a reference angle (A₀) such that this axis of symmetry (E'E) can be substantially parallel to the ground reference (S₀) when the helicopter, on the engine of which the purge collector can be fixed, is in the acceleration phase.

6. Purge collector according to the preceding claim, wherein the axis of the enclosure (E'E) is inclined by a relative angle (C) fixed between +5 and + 10° with respect to a main axis of the helicopter (Y'Y) defining the inclination of the helicopter (H) with respect to the horizontal reference plane (S₀).

7. Purge collector according to one of claims 5 or 6, wherein the radial connection (64) of the purge drain coupling of the injection wheel (53) joins closer to the first wall (63) than the bottom wall (62) of the enclosure (6).

8. Purge collector according to one of claims 5 to 7, wherein the enclosure (6) has a cylindrical shape with a circular section.

9. Purge collector according to one of claims 5 to 8, wherein the enclosure (6) has a volume (V) more than two times greater than the volume of fuel (7) that can be trapped in the enclosure (6).

10. Helicopter engine (1) provided with a collector (4) according to one of claims 5 to 9.
